# EUROPÄISCHE PATENTANMELDUNG

(11) **EP 2 641 707 A1**
(43) Veröffentlichungstag der Anmeldung: **25.09.2013**
(21) Anmeldenummer: 12002082.1
(22) Anmeldetag: 23.03.2012
(51) Int. Cl.: B26D 5/00, B26D 7/01, B26D 7/02, G05B 19/4068, G05B 19/409

(54) **Verfahren zum Betreiben einer Schneidmaschine**

(71) Anmelder: Adolf Mohr Maschinenfabrik GmbH & Co. KG, 65719 Hofheim am Taunus (DE)
(72) Erfinder: Rohr, Gerhard, 65719 Hofheim (DE)
(74) Vertreter: Quermann, Helmut

(57) **Zusammenfassung**

Die Erfindung betrifft ein Verfahren zum Betreiben einer Schneidemaschine zum Schneiden von gestapeltem, blattförmigem Gut, bei dem programmierte Schneidmaße und zu den Schneidmaßen programmierte Zusatzfunktionen der Schneidemaschine gleichzeitig auf einem als Touchscreen ausgebildeten Display der Schneidemaschine dargestellt werden, wobei die programmierten Schneidmaße in einem ersten Teilbereich des Displays und die programmierten Zusatzfunktionen in einem zweiten Teilbereich des Displays dargestellt werden.

Aufgabe der Erfindung ist es ein Verfahren zum Betreiben einer Schneidemaschine der eingangs genannten Art so weiterzubilden, dass eine einfache, fehlerfreie Bedienbarkeit der Schneidemaschine und umfassende Information des Bedieners der Schneidemaschine unter dem Aspekt der möglichen Zusatzfunktionen der Schneidemaschine möglich ist.

Erfindungsgemäß ist vorgesehen, dass zusätzlich im zweiten Teilbereich des Displays eine Vielzahl programmierbarer Zusatzfunktionen dargestellt werden, wobei in einem Überlappungsbereich der Darstellung der programmierten Zusatzfunktionen und der Darstellung der Vielzahl programmierbarer Zusatzfunktionen die programmierten Zusatzfunktionen und die Vielzahl programmierbarer Zusatzfunktionen dargestellt werden.

## Beschreibung

Die Erfindung betrifft ein Verfahren zum Betreiben einer Schneidemaschine zum Schneiden von gestapeltem, blattförmigem Gut, bei dem programmierte Schneidmaße und zu den Schneidmaßen programmierte Zusatzfunktionen der Schneidemaschine gleichzeitig auf einem als Touchscreen ausgebildeten Display der Schneidemaschine dargestellt werden, wobei die programmierten Schneidmaße in einem ersten Teilbereich des Displays und die programmierten Zusatzfunktionen in einem zweiten Teilbereich des Displays dargestellt werden.

Beim Betreiben einer Schneidemaschine zum Schneiden von gestapeltem, blattförmigem Gut wird entsprechend den vorzunehmenden Schnitten bzw. Schneidmaßen ein Schneidsatz in der Schneidemaschine programmiert. Ferner sind Zusatzfunktionen zu programmieren, die entsprechend dem Schneidablauf zu berücksichtigen sind. Bei den programmierbaren Zusatzfunktionen handelt es sich beispielsweise um die Zusatzfunktion des Pressens eines auf einem Tisch der Schneidemaschine aufliegenden Schneidgutstapels mittels eines Pressbalkens der Schneidemaschine, ohne dass gleichzeitig mit dem Pressen geschnitten wird. Eine weitere Zusatzfunktion bezieht sich beispielsweise auf das Aktivieren einer Luftzufuhr im Bereich des Gesamttisches der Schneidmaschine oder aber nur eines vorderen Tischteils der Schneidemaschine, um durch Ausgabe der Luft ein Luftpolster zu erzeugen, dass die Handhabung des im betreffenden Tischbereichs befindlichen Schneidgutstapel auf dem Tisch erleichtert. Die Zusatzfunktion kann sich beispielsweise auch auf das Verstellen eines Anlagemaßes für den Stapel, das Verstellen eines Einlegemaßes für den Stapel, eine Drehsattelfunktion, somit eine Schwenkung des Vorschubsattels für das zu schneidende Gut um wenige Winkelgrade, ferner auf die Funktion eines Zwischenschnitts mit Abfallentsorgung oder die Funktion des Absenkens eines vorderen Tischteils zur Aufnahme einer Unterlage für geschnittenes Gut beziehen.

Eine Schneidemaschine mit Drehsattel ist beispielsweise in der DE-PS 1 255 630 beschrieben. Eine Schneidemaschine, mit der die Funktion des Zwischenschnitts mit Abfallentsorgung und die Funktion des Absenkens des vorderen Tischteils zur Aufnahme einer Unterlage fortgeführt werden kann, ist aus der EP 0 056 874 A2 bekannt.

Die bekannten Schneidemaschinen verfügen über eine große Anzahl von Zusatzfunktionen, deren Anzahl deutlich größer ist als die vorstehend erörterten Zusatzfunktionen. Dies führt dazu, dass der Bediener der Schneidemaschine eine genaue Kenntnis über die Programmiermöglichkeiten der Schneidemaschine bzw. die programmierten Zusatzfunktionen haben muss. Um ihm dies zu erleichtern, werden auf dem Display, insbesondere dem als Touchscreen ausgebildeten Display, programmierbare oder programmierte Funktionen der Schneidemaschinen mittels graphischer Symbole dargestellt. Für die eine Zusatzfunktion ist somit ein bestimmtes graphisches Symbol, für die andere Zusatzfunktion ein anderes graphisches Symbol vorgesehen. Bei diesen graphischen Symbolen handelt es sich insbesondere um Piktogramme, somit ein Symbol bzw. ein Ikon, das eine Information durch eine vereinfachte graphische Darstellung vermittelt.

Oftmals geben solche als Piktogramme dargestellten Zusatzfunktionen dem Bediener noch keine hinreichende Information über die programmierte Zusatzfunktion bzw. die Möglichkeit hinzu zu programmierender Zusatzfunktionen. Fehlerhafte Einstellungen der Schneidemaschine lassen sich somit nicht immer vermeiden.

Aufgabe der Erfindung ist es, ein Verfahren zum Betreiben einer Schneidemaschine der eingangs genannten Art so weiterzubilden, dass eine einfache, fehlerfreie Bedienbarkeit der Schneidemaschine und umfassende Information des Bedieners der Schneidemaschine unter dem Aspekt der möglichen Zusatzfunktionen der Schneidemaschine möglich ist.

Gelöst wird die Aufgabe bei einem Verfahren der eingangs genannten Art dadurch, dass zusätzlich im zweiten Teilbereich des Displays eine Vielzahl programmierbarer Zusatzfunktionen dargestellt werden, wobei in einem Überlappungsbereich der Darstellung der programmierten Zusatzfunktionen und der Darstellung der Vielzahl programmierbarer Zusatzfunktionen die programmierten Zusatzfunktionen und die Vielzahl programmierbarer Zusatzfunktionen dargestellt werden.

Das erfindungsgemäße Verfahren ermöglicht es dem Bediener, gleichzeitig auf dem Display die zu einem programmierten Schneidmaß programmierten Zuatzfunktionen, insbesondere die zu allen programmierten Schneidmaßen programmierten Zusatzfunktionen, und die Vielzahl programmierbarer Zusatzfunktionen auf dem Display darzustellen. Somit wird dem Bediener über diese Darstellung nicht nur die Information über die programmierten Schneidmaße und die programmierten Zusatzfunktionen gegeben, sondern auch über die Vielzahl programmierbarer Zusatzfunktionen, die der Bediener somit programmieren könnte bzw. aus denen er bestimmte Zusatzfunktionen zum Programmieren auswählen kann. Diese werden dann zusätzlich zu den bereits programmierten Zusatzfunktionen dargestellt.

Da im Überlappungsbereich sowohl die programmierten Zusatzfunktionen als auch Zusatzfunktionen der Vielzahl programmierbarer Zusatzfunktionen dargestellt werden, steht für die Darstellung der Vielzahl programmierbarer Zusatzfunktionen ein großer Bereich des Displays zur Verfügung. Unter diesem Aspekt wird es als besonders vorteilhaft angesehen, wenn die Vielzahl programmierbarer Zusatzfunktionen im gesamten zweiten Teilbereich des Displays dargestellt werden.

Die elektronische Ansteuerung des Displays erfolgt besonders vorteilhaft derart, dass im Überlappungsbereich die programmierten Zusatzfunktionen als Vordergrundbild und die programmierbaren Zusatzfunktionen als Hintergrundbild dargestellt werden. Die Bezeichnung des Vordergrundbildes bzw. des Hintergrundbildes ist nicht dahingehend zu verstehen, dass das eine Bild hinter dem anderen Bild angeordnet ist, sondern dass der Betrachter den Eindruck vermittelt bekommt, dass das eine Bild weiter vorne angeordnet ist als das andere Bild. In der Realität, d. h. steuerungstechnisch, erfolgt die Wiedergabe des Vordergrundbildes und des Hintergrundbildes insbesondere dadurch, dass bei Einblenden des Hintergrundbildes, somit der Darstellung der Vielzahl programmierbarer Zusatzfunktionen zu dem Vorderbild, somit den dargestellten programmierten Zusatzfunktionen, ein neues Bild auf dem Display wiedergegeben wird, dass die Bildelemente von Vordergrundbild und Hintergrundbild vereinigt.

Insbesondere wird der Effekt des Vordergrundbildes und des Hintergrundbildes dadurch erreicht, dass im Überlappungsbereich die programmierten Zusatzfunktionen relativ kontraststark und die programmierbaren Zusatzfunktionen relativ kontrastschwach dargestellt werden. Damit rückt die Darstellung der programmierten Zusatzfunktion in den Vordergrund und die Darstellung der Vielzahl programmierbarer Zusatzfunktionen in den Hintergrund.

Es ist gleichfalls denkbar, die programmierten Zusatzfunktionen in schwarz und die Vielzahl programmierbarer Zusatzfunktionen farbig bzw. umgekehrt darzustellen. Auch hierdurch kann die gewünschte Unterscheidung von Vordergrundbild und Hintergrundbild für den Bediener herbeigeführt werden.

Eine besonders günstige, durch den Bediener besonders schnell und einfach zu erfassende Anordnung der programmierten Zusatzfunktion ist dann gegeben, wenn neben jedem Schnittmaß die zu diesem programmierten Zusatzfunktionen, in einer horizontalen Reihe angeordnet, auf dem Display dargestellt werden.

Um die Wahrnehmbarkeit der einzelnen Darstellung der Vielzahl programmierbarer Zusatzfunktionen, die als Hintergrundbild darstellbar sind, zu erhöhen, wird es als vorteilhaft angesehen, wenn die einzelne Darstellung der Vielzahl programmierbarer Zusatzfunktionen wesentlich größer ist als die jeweilige Darstellung der programmierten Zusatzfunktion. Die einzelne Darstellung der Vielzahl programmierbarer Zusatzfunktionen ist beispielsweise 30 bis 50 mal so groß wie die Darstellung der jeweiligen programmierten Zusatzfunktion.

Die Vielzahl programmierbarer Zusatzfunktionen wird vorzugsweise in Reihen und Spalten angeordnet dargestellt. Es wird als besonders vorteilhaft angesehen, wenn die Vielzahl programmierbarer Zusatzfunktionen, die insbesondere in Reihen und Spalten angeordnet dargestellt werden, durch Betätigen des Touchscreens gescrollt werden können. Der Bediener der Schneidemaschine kann sich somit durch scrollen ein einfaches Bild über alle zu programmierbaren Zusatzfunktionen machen, obgleich nur ein Teil der Vielzahl programmierbarer Zusatzfunktionen auf dem Display, konkret dem zweiten Teilbereich des Displays dargestellt werden.

Gemäß einem besonderen Verfahrensmerkmal ist vorgesehen, dass die jeweilige programmierte Zusatzfunktion als Piktogramm dargestellt wird. Durch den Aussageinhalt dieses Piktogramms erhält der Bediener eine relativ konkrete Information betreffend die Bedeutung der programmierten Zusatzfunktion.

Dieser Aussagegehalt betreffend die jeweilige Zusatzfunktion lässt sich signifikant dadurch steigern, wenn programmierbare Zusatzfunktionen der Vielzahl programmierbarer Zusatzfunktionen als bewegtes Bild dargestellt werden. Beim Auswählen der Zusatzfunktion aus der Vielzahl programmierbarer Zusatzfunktionen, um diese ausgewählte Zusatzfunktion im Sinne einer Programmierung der Schneidemaschine abzuspeichern, erhält der Bediener über die bewegte Bilddarstellung eine Information über den Ablauf dieser Funktion der Schneidemaschine auf dem Display, konkret welche Funktionsschritte die Schneidemaschine bei Aufrufen dieser Zusatzfunktion vollführt bzw. im Wesentlichen vollführt.

Das bewegte Bild wird beispielsweise aus 30 bis 70 Teilbildern, vorzugsweise 40 bis 60 Teilbildern, insbesondere 50 Teilbildern erstellt. Diese Anzahl der Teilbilder ist ausreichend, um mittels des Displays der Schneidemaschine dem Bediener eine hinreichend genaue Information über die jeweilige Zusatzfunktion der Schneidemaschine zu übermitteln.

Wie eingangs bereits erörtert, kann die Schneidemaschine für eine Vielzahl unterschiedlichster, programmierbarer Zusatzfunktionen eingerichtet sein. Insbesondere handelt es sich bei den programmierbaren Zusatzfunktionen um Zusatzfunktionen wie Pressen eines Schneidgutstapels mittels eines Pressbalkens ohne gleichzeitiges Schneiden, Aktivieren einer Luftzufuhr im Bereich des Gesamttisches der Schneidemaschine zum Handhaben des Schneidgutstapels auf einem aus dem Tisch austretenden Luftstrom zum Erzeugen eines Luftpolsters, Aktivieren dieser Luftzufuhr nur in einem Bereich des vorderen Tischteils des Gesamttisches, Verstellen eines Anlagemaßes für den Stapel, Verstellen eines Einlegemaßes für den Stapel.

Um eine besonders gute Bedienerführung zu erreichen, wird es als vorteilhaft angesehen, wenn sowohl das jeweilige auf dem Display dargestellte angefahrene Schneidmaß oder das als nächstes anzufahrende Schneidmaß als auch die diesem Schneidmaß zugeordneten, auf dem Display dargestellten programmierten Zusatzfunktionen gegenüber den anderen Schneidmaßen und diesen zugeordneten programmierten Zusatzfunktionen hervorgehoben dargestellt werden. Der Bediener kann somit schnell und einfach das aktuelle Schneidmaß und die diesem zugeordneten Zusatzfunktionen, gegebenenfalls auch die zu diesem Schneidmaß programmierbaren Zusatzfunktionen, die auf dem Hintergrundbild dargestellt sind, erkennen.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

Es zeigt:
- Fig. 1: eine Ansicht einer Schneidemaschine zum Schneiden von gestapeltem, blattförmigem Gut, zur Durchführung des erfindungsgemäßen Verfahrens, in einer Vorderansicht, somit von der Bedienerseite gesehen, mit einem als Tochscreen ausgebildeten Display,
- Fig. 2: das Display mit dargestellten programmierten Schneidmaßen und zu den Schneidmaßen programmierten Zusatzfunktionen der Schneidemaschine,
- Fig. 3: das Display gemäß Fig. 2 mit den programmierten Schneidmaßen und zusätzlich zu diesen dargestellter Auswahl der Vielzahl programmierbarer Zuatzfunktionen,
- Fig. 4: das Display bei dem sowohl die programmierten Schneidmaße und die zu den Schneidmaßen programmierten Zusatzfunktionen gemäß Fig. 2 als auch die Auswahl der Vielzahl programmierbarer Zusatzfunktionen gemäß Fig. 3 gemeinsam dargestellt sind.

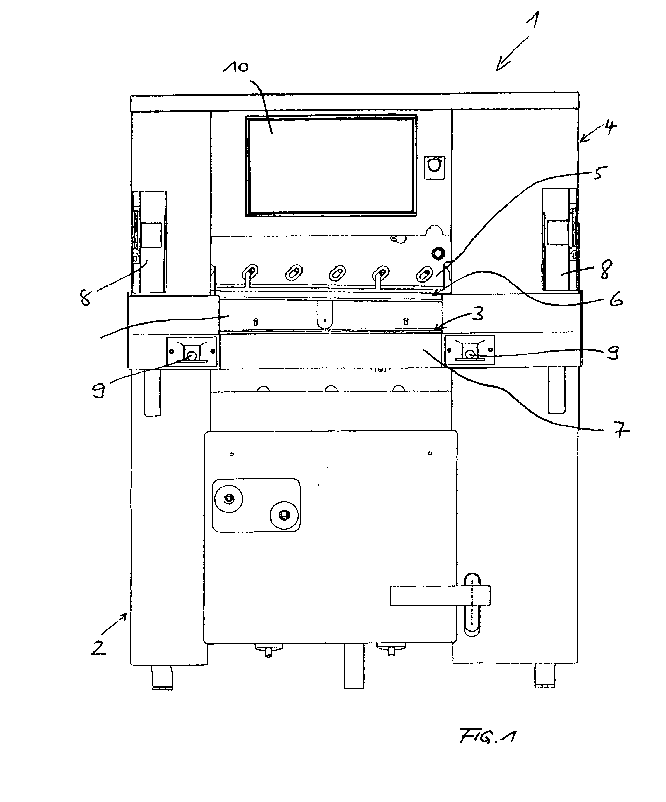

Die in Fig. 1 veranschaulichte Schneidemaschine 1 zum Schneiden von gestapeltem, blattförmigem Gut, wie Papier, Pappe, Kunststofffolie und dergleichen ist aus dem Stand der Technik grundsätzlich bekannt. Die Schneidemaschine 1 weist ein Grundgestell 2 mit einem in diesem gelagerten Tisch 3 zur Aufnahme des zu schneidenden Gutes bzw. des geschnittenen Gutes auf. Die bei dem Schnitt anfallenden Stapel werden auch als Nutzenstapel bezeichnet. Im Grundgestell 2 ist beidseitig des Tisches 3 ein Portalrahmen 4 gelagert. In diesem ist ein Schneidmesser 5 und neben diesem ein Pressbalken 6 gelagert. Das Schneidmesser 5 ist mittels eines nicht veranschaulichten Kurbeltriebes im Schwingschnitt beweglich. Der Antrieb für den Kurbeltrieb ist gleichfalls nicht veranschaulicht. Demnach lässt sich das Schneidmesser 5 aus seiner angehobenen Position absenken und wieder anheben, und wird hierbei auch horizontal bewegt. Der auf der der Schneidebene abgewandten Seite des Schneidmessers 5 angeordnete Pressbalken 6 lässt sich mittels hydraulisch wirkenden Stellmitteln absenken und dient dem Zweck, das zu schneidende Gut zwischen dem Pressbalken 6 und dem Tisch 3 zu Fixieren. Mittel zum Anheben des Pressbalkens 6 aus dessen abgesenkter Stellung sind nicht veranschaulicht. Der Tisch 3 weist vor der vertikalen Schneidebene des Schneidmessers 5 ein vorderes Tischteil 7 und hinter der Schneidebene des Schneidmessers 5 ein hinteres Tischteil auf. Beidseitig sind im Portalrahmen 4 auf der Bedienerseite Lichtschrankeneinheiten 8 positioniert, die gewährleisten, dass der Bediener der Schneidemaschine 1 nicht unbefugt in den Bereich des Schneidmessers eingreift. Beidseitig des Tisches 3 sind auf der Bedienerseite zwei Tasten 9 zum Auslösen des Schneidevorgangs angeordnet.

Auf der Bedienerseite ist der Portalrahmen 4 in dessen Bereich oberhalb des Tisches 3 mit einem als Touchscreen ausgebildeten Display 10 versehen. Durch Berühren des Displays mittels des Bedieners kann dieser die Schneidemaschine 1 bezüglich deren gewünschten Funktionen programmieren. Es handelt sich hierbei insbesondere um die Programmierung eines abzuarbeitenden Schneidsatzes der Schneidemaschine und um die Programmierung von in diesem Zusammenhang vorzusehenden Zusatzfunktionen.

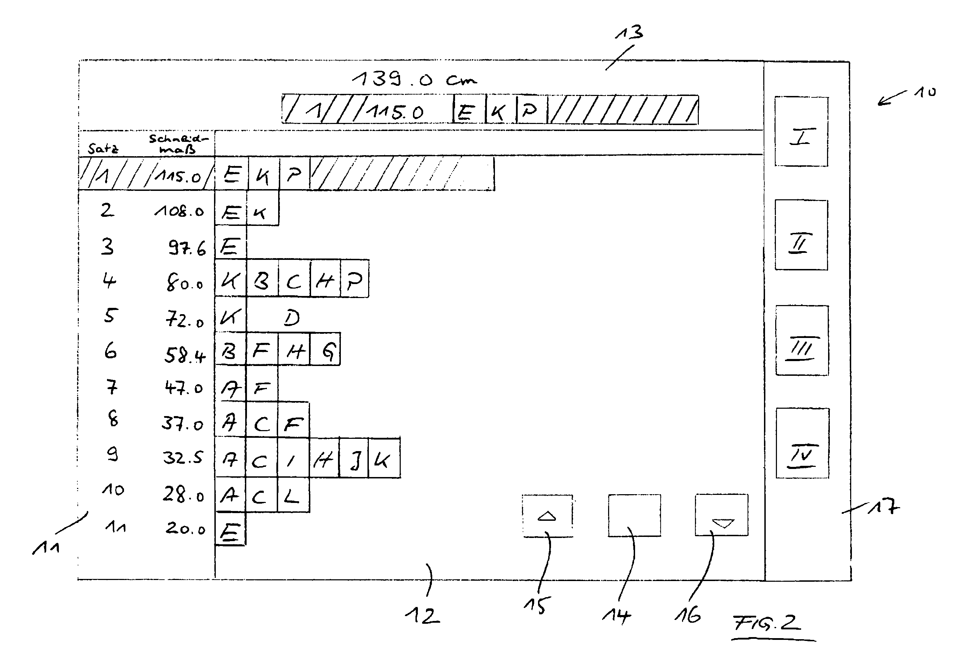

Fig. 2 zeigt das Display 10 mit dargestellten, programmierten Schneidmaßen und zu den Schneidmaßen dargestellten, programmierten Zusatzfunktionen der Schneidemaschine 1.

Im Einzelnen weist das Display 10 einen ersten, links dargestellten, rechteckigen Teilbereich 11 und rechts neben diesem einen größeren, rechteckigen, zweiten Teilbereich 12 auf. Die beiden Teilbereiche 12 bilden ein Rechteck des Displays 10 bzw. Touchscreen.

Im oberen Bereich des ersten Teilbereichs 11 befinden sich Angaben "Satz" und "Schneidmaß" für die Sätze bzw. Schneidmaße, die von der Schneidemaschine 1 bei den diversen zu vollführenden Schnitten abzuarbeiten sind. Wiedergegeben sind die Sätze 1 bis 11, wobei sich der Vorschubsattel beim Satz 1 an einer solchen Position befindet, dass ein Schneidmaß von 115 cm angefahren wird. Der Vorschubsattel befindet sich somit mit seiner der Schneidebene zugewandten Seite in einem Abstand von 115 cm zur Schneidebene. Im Anschluss an den ersten programmierten Schnitt - Satz 1 bei Schneidmaß 115 cm - folgt bei Satz 2 der zweite Schnitt, bei dem sich der Vorschubsattel nach dessen Verfahren in einem Abstand von 108 cm zur Schneidebene befindet. Es folgen dann die Schnitte bzw. Sätze 3 bis 11, bei denen der Vorschubsattel schrittweise immer mehr in Richtung der Schneidebene verfahren wird, so dass er beim Satz 11, somit dem 11. Schnitt einen Abstand von 20 cm zur Schneidebene einnimmt.

Zu diesen vom Bediener oder extern programmierten Schneidmaßen der Schneidemaschine 1 werden durch den Bediener oder extern Zusatzfunktionen programmiert. Beispielsweise sind Zusatzfunktionen A bis R programmierbar. Mögliche Zusatzfunktionen sind beispielsweise weiter vorstehend erörtert worden, so dass zur Vermeidung von Wiederholungen auf diese Ausführung Bezug genommen wird. So ist zum Satz 1, Schneidmaß 115 cm, die Zusatzfunktion E, die Zusatzfunktion K und die Zusatzfunktion P programmiert worden. Beim Schnitt beim Schneidmaß 115 cm arbeitet die Schneidemaschine somit unter Anwendung der Zusatzfunktionen E, K, P. Beim Satz 2 hingegen, somit zweiten Schnitt beim Schneidmaß 108 cm arbeitet die Schneidemaschine 1 nur mit den programmierten Zusatzfunktionen E und K. Beim erneuten Schnitt, somit dem Satz 9 und dem Schneidmaß 32,5 cm arbeitet die Schneidemaschine mit den Zusatzfunktionen A, C, I, H, J, K.

In einem oberhalb der beiden Teilbereiche 11 und 12 angeordneten dritten Teilbereich 13 des Displays 10 ist die aktuelle Position 139 cm des Vorschubsattels zur Schneidebene mit angegeben und darunter in diesem Teilbereich 13 das aktuell anzufahrende Schneidmaß 115 cm des Satzes 1. Zusätzlich sind die für dieses Schneidmaß 115 cm programmierten Zusatzfunktionen E, K, P eingeblendet. Die Schraffuren betreffend den Satz 1 im Teilbereich 13 und betreffend Satz 1 in den Teilbereichen 11 und 12 verdeutlichen, dass der schraffierte Bereich dem Bediener gegenüber den Sätzen 2 bis 11 und zu diesen programmierten Zusatzfunktionen hervorgehoben ist, so dass der Bediener das aktuell anzufahrende Schneidmaß des Satzes 1 besonders einfach erkennen kann. Die Hervorhebung erfolgt in den genannten schraffierten Bereichen insbesondere dadurch, dass diese Bereiche farbig besonders hervorgehoben sind, beispielsweise in der Farbe gelb. Aus Gründen zeichnerischer Klarheit erstreckt sich die Schraffur nur über eine Teillänge der jeweiligen Zeile. Die farbige Hervorhebung erfolgt über die gesamte Länge der schraffierten Zeile.

Zusätzlich sind im zweiten Teilbereich 12, unten rechts, Touchscreenbereiche 14, 15 und 16 für den Bediener ausgewiesen. Durch Berühren des Bereiches 14 mehrfach hintereinander, lassen sich unterschiedliche Bedienungsebenen anwählen, beispielsweise die Bedienungsebene der Satzauswahl. Ist die Zusatzauswahl angewählt, kann durch Berühren des Bereiches 16 der zum Satz 1 angezeigte schraffierte Balken nach unten bewegt werden und durch Berühren des Bereiches 15 dieser Balken nach oben bewegt werden, so dass auch auf diese Art und Weise der konkrete Satz, beispielsweise der Satz 6 angefahren werden kann. In diesem Fall wäre der Balken des Satzes 6 beleuchtet und es würde diese beleuchtete Zeile zusätzlich statt der in Fig. 2 im Bereich 13 angezeigten hervorgehobenen Zeile dort hervorgehoben.

Grundsätzlich könnte statt der Touchscreenbereiche 14, 15, 16 ein separater Bereich auf dem Display 10 ausgewiesen sein, beispielsweise rechts neben den angegebenen Schneidmaßen, der es erlaubt, durch Berühren des Touchscreens eine Scrollfunktion zum Anwählen der Sätze zu verwirklichen.

Das Display 10 weist rechts neben den Teilbereichen 12 und 13 einen vierten Teilbereich 17 auf. In diesem sind untereinander Touchscreenbereiche I., II., III, IV vorgesehen, wobei der jeweilige dieser Touchscreenbereiche dem Anwählen bestimmter programmierbarer Zusatzfunktionen aus einer Vielzahl programmierbarer Funktionen der Schneidemaschine dient.

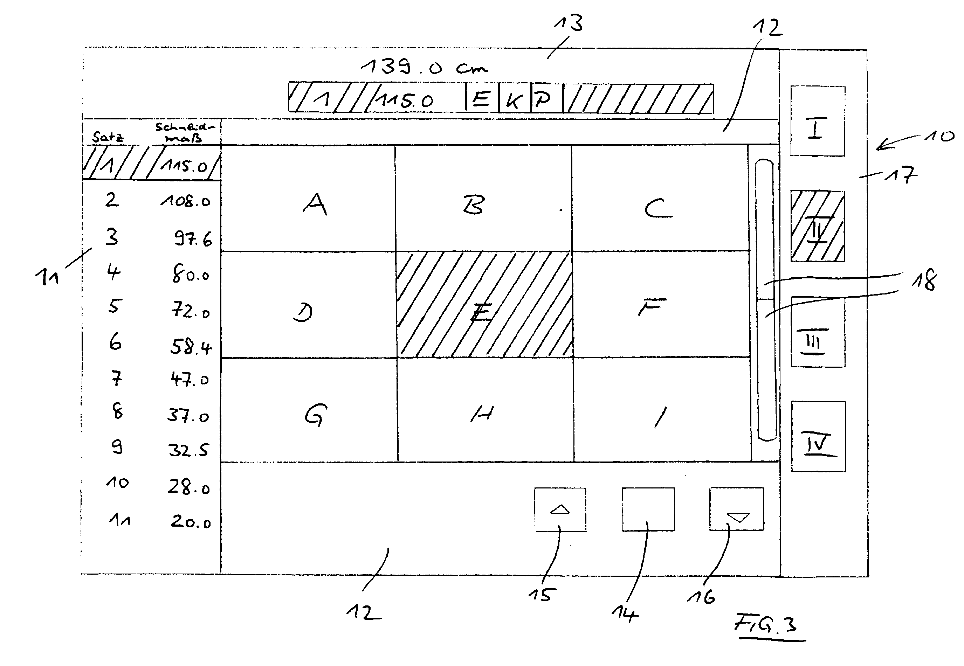

Für den Zustand der Schneidemaschine 1 gemäß Fig. 2 sind bei der Displaydarstellung gemäß Fig. 3 die zu den Sätzen 1 bis 11 programmierten Zusatzfunktionen der Schneidemaschine 1 im Bereich des zweiten Teilbereichs 12 ausgeblendet. Dieser zweite Teilbereich 12 steht für eine großflächige Wiedergabe von Zusatzfunktionen der Vielzahl programmierbarer Zusatzfunktionen zur Verfügung. Wird beispielsweise der Touchscreenbereich II. im Teilbereich 17 berührt, und damit die Funktion II. aktiviert, dient der Touchscreenbereich 12, der unter dieser Grundfunktion II. abgespeicherten Zusatzfunktionen A bis R, wobei diese in sechs Reihen und drei Spalten wiedergegeben sind. In der ersten Reihe befinden sich die Zusatzfunktionen A, B, C, in der zweiten Reihe die Zusatzfunktionen D, E, F, in der dritten Reihe die Zusatzfunktionen G, H, I, usw., somit in der letzten Reihe die Zusatzfunktionen P, Q,R. Wie der Darstellung der Fig. 3 zu entnehmen ist, sind maximal 9 Zusatzfunktionen durch die diesen zugeordneten identischen Rechtecke vollständig auf dem Display 10 im zweiten Teilbereich 12 darstellbar. Durch scrollen des Bildes im zweiten Teilbereich 12 mittels Scrollberührung eines Touchscreenbereiches 18 lassen sich die in Fig. 3 nicht sichtbaren Felder der Zusatzfunktionen J bis R auf den Teilbereich 12 des Displays 10 einblenden.

Wie der Darstellung der Fig. 2 für den Satz 1 und der Darstellung der Fig. 2 und 3 für den Teilbereich 13 zu entnehmen ist, sind zum Satz 1 die Zusatzfunktionen E, K und P programmiert. Bei der angewählten Grundfunktion II., und damit den hiermit im Zusammenhang stehenden Zusatzfunktionen A bis R, ist nur die auf dem Teilbereich 12 des Displays 10 gezeigte Zusatzfunktion E farbig hinterlegt und demnach gegenüber den anderen Zusatzfunktionen A bis I hervorgehoben. Würde das Bild im Teilbereich 2 gescrollt, würden die Zusatzfunktionen K und P gleichfalls farbig hinterlegt erscheinen.

Grundsätzlich kann durch den Bediener das Programmieren der Zusatzfunktionen bzw. Umprogrammieren von Zusatzfunktionen so erfolgen, dass bei angefahrenem Satz, beispielsweise dem Satz 1, durch Berühren des Feldes "A" nunmehr statt der gespeicherten Funktion E die Funktion A gespeichert wird und diese dann farbig hervorgehoben wird, sowie in den Balken zum Satz 1 die neue programmierte Zusatzfunktionenangabe A, K, P erscheint.

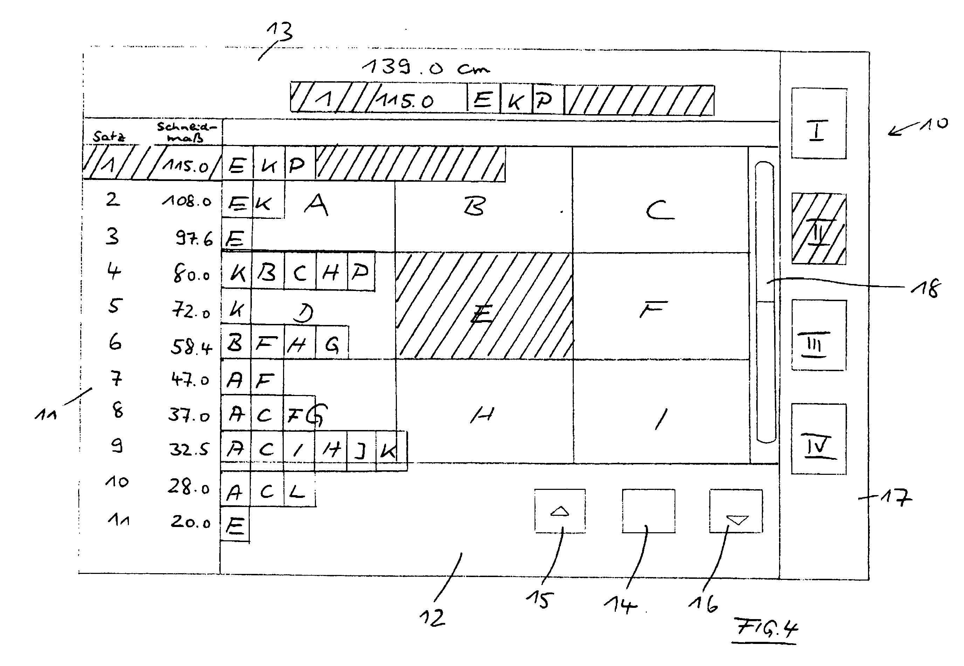

Das Verfahren zum Betreiben der Schneidemaschine 1 ist aber auch dahingehend ausgelegt, dass nicht nur die programmierten Schneidmaße im Teilbereich 11 und die zu den Schneidmaßen programmierten Zusatzfunktionen gemäß der diesen Schneidmaßen zugeordneten horizontalen Balken, beispielsweise zum Satz 1 der Balken "E, K, P", im Teilbereich 12 angezeigt wird, sondern dass, wie der Darstellung der Fig. 4 zu entnehmen ist, zusätzlich im Teilbereich 12 die Vielzahl programmierbarer Zusatzfunktionen, somit die großen Kästchen A bis I bzw. unter Berücksichtigung der Scrollfunktion die großen Kästchen A bis R gemäß Fig. 3 dargestellt werden. In den im Wesentlichen linken Überlappungsbereich der Darstellung der programmierten Zusatzfunktionen, gemäß der den Sätzen 1 bis 11 zugeordneten Balken, und der Darstellung der Vielzahl programmierbarer Zusatzfunktionen sind die programmierten Zusatzfunktionen und die Vielzahl programmierbarer Zusatzfunktionen dargestellt. Dem Bediener stellt sich somit die Wiedergabe auf dem Display 10 als Überlagerung der Bilder von Fig. 2 und Fig. 3 dar. Es werden dem Bediener somit bei der Darstellung gemäß Fig. 4 sowohl die programmierten Schneidmaße als auch die zu den Schneidmaßen programmierten Zusatzfunktionen als auch die Vielzahl programmierbarer Zusatzfunktionen dargestellt.

Bezogen auf die konkrete Darstellung gemäß Fig. 4 erstreckt sich der Überlappungsbereich auf die in den großen Kästchen dargestellten Zusatzfunktionen A, B, D, G und H.

Die Vielzahl programmierbarer Zusatzfunktionen gemäß der großen Kästchen A bis R werden somit im gesamten zweiten Teilbereich 12 des Displays 10 dargestellt.

Im Überlappungsbereich werden die programmierten Zusatzfunktionen, die in den horizontalen Balken erscheinen, relativ kontraststark und die programmierbaren Zusatzfunktionen gemäß der relativ großen Kästchen relativ kontrastschwach dargestellt. Wichtig ist, dass die programmierbaren Zusatzfunktionen gemäß der kleinen Kästchen A bis R für den Bediener als Hintergrundbild bezüglich des Vordergrundbildes, das durch die programmierten Zusatzfunktionen gemäß der horizontalen Balken gebildet ist, sichtbar ist. Die programmierten Zusatzfunktionen können in schwarz und die Vielzahl programmierbarer Zusatzfunktionen farbig dargestellt werden.

Die programmierten Zusatzfunktionen A bis R gemäß der horizontalen Balken zu den einzelnen Schneidsätzen sind insbesondere Piktrogramme, so dass der Bediener den Inhalt der programmierten Zusatzfunktion grundsätzlich erfassen kann. Die programmierbaren Zusatzfunktionen gemäß der großen Kästchen A bis R im zweiten Teilbereich 12 hingegen sind vorzugsweise als bewegte Bilder Dargestellt. So entspricht insbesondere ein Ausgangspiktogramm der programmierbaren Zusatzfunktion, beispielsweise der Zusatzfunktion gemäß dem großen Kästchen A, dem Piktogramm, das zur programmierten Zusatzfunktion A im Balken des Schneidsatzes wiedergegeben ist. Bei Berühren des Touchscreens im Bereich des großen Kästchens A wird beispielsweise die von dem Piktogramm ausgehende Bildfolge gestartet, so dass der Bediener durch das bewegte Bild eine genaue Information über den Inhalt dieser Zusatzfunktion erhält.

Bei der programmierbaren Zusatzfunktion handelt es sich beispielsweise um eine Zusatzfunktion wie Pressen des Schneidgutstapels mittels des Pressbalkens ohne gleichzeitiges Schneiden, Aktivieren einer Luftzufuhr im Bereich des Gesamttisches der Schneidemaschine zum Handhaben des Schneidgutstapels auf einem durch aus dem Tisch austretende Luft gebildeten Luftpolster, Aktivieren der Luftzufuhr nur im Bereich eines vorderen Tischteils des Gesamttisches zur Erzeugung des Luftpolsters, Verstellen eines Anlagemaßes für den Stapel, Verstellen eines Einlegemaßes für den Stapel usw.

Sind zu den einzelnen Sätzen 1 bis 11 der Schneidemaschine 1 die Zusatzfunktionen programmiert, wird durch Berühren des Touchscreenbereiches 14 das Display 10 wieder in den Modus gemäß Darstellung in Fig. 2 überführt, so dass die programmierbaren Zusatzfunktionen gemäß Fig. 3 ausgeblendet sind.

## Patentansprüche

1. Verfahren zum Betreiben einer Schneidemaschine zum Schneiden von gestapeltem, blattförmigem Gut, bei dem programmierte Schneidmaße und zu den Schneidmaßen programmierte Zusatzfunktionen der Schneidemaschine gleichzeitig auf einem als Touchscreen ausgebildeten Display der Schneidemaschine dargestellt werden, wobei die programmierten Schneidmaße in einem ersten Teilbereich des Displays und die programmierten Zusatzfunktionen in einem zweiten Teilbereich des Displays dargestellt werden, **dadurch gekennzeichnet, dass** zusätzlich im zweiten Teilbereich des Displays eine Vielzahl programmierbarer Zusatzfunktionen dargestellt werden, wobei in einem Überlappungsbereich der Darstellung der programmierten Zusatzfunktionen und der Darstellung der Vielzahl programmierbarer Zusatzfunktionen die programmierten Zusatzfunktionen und die Vielzahl programmierbarer Zusatzfunktionen dargestellt werden.

2. Verfahren nach Anspruch 1, **dadurch gekennzeichnet, dass** die Vielzahl programmierbarer Zusatzfunktionen im gesamten zweiten Teilbereich des Displays dargestellt werden.

3. Verfahren nach Anspruch 1 oder 2, **dadurch gekennzeichnet, dass** im Überlappungsbereich die programmierten Zusatzfunktionen als Vordergrundbild und die programmierbaren Zuatzfunktionen als Hintergrundbild dargestellt werden.

4. Verfahren nach einem der Ansprüche 1 bis 3, **dadurch gekennzeichnet, dass** im Überlappungsbereich die programmierten Zusatzfunktionen relativ kontraststark und die programmierbaren Zusatzfunktionen relativ kontrastschwach dargestellt werden.

5. Verfahren nach einem der Ansprüche 1 bis 4, **dadurch gekennzeichnet, dass** die programmierten Zusatzfunktionen in schwarz und die Vielzahl programmierbarer Zusatzfunktionen farbig dargestellt werden.

6. Verfahren nach einem der Ansprüche 1 bis 5, **dadurch gekennzeichnet, dass** neben jedem Schnittmaß die zu diesem programmierten Zusatzfunktionen, in einer horizontalen Reihe angeordnet, auf dem Display dargestellt werden.

7. Verfahren nach einem der Ansprüche 1 bis 6, **dadurch gekennzeichnet, dass** die einzelnen Darstellungen der Vielzahl programmierbarer Zusatzfunktionen wesentlich größer ist als die jeweilige Darstellung der programmierten Zusatzfunktionen, insbesondere 30 bis 50 mal so groß ist.

8. Verfahren nach einem der Ansprüche 1 bis 7, **dadurch gekennzeichnet, dass** die programmierbaren Zusatzfunktionen in Reihen und Spalten angeordnet dargestellt werden und durch Betätigen des Touchscreens gescrollt werden.

9. Verfahren nach einem der Ansprüche 1 bis 8, **dadurch gekennzeichnet, dass** die jeweilige programmierte Zusatzfunktion als Piktogramm dargestellt wird.

10. Verfahren nach einem der Ansprüche 1 bis 9, **dadurch gekennzeichnet, dass** programmierbare Zusatzfunktionen der Vielzahl programmierbarer Zusatzfunktionen jeweils als bewegtes Bild dargestellt werden.

11. Verfahren nach einem der Ansprüche 1 bis 10, **dadurch gekennzeichnet, dass** die programmierbaren Zusatzfunktionen Zusatzfunktionen wie Pressen eines Schneidgutstapels mittels eines Pressbalkens ohne gleichzeitiges Schneiden, Aktivieren einer Luftzufuhr im Bereich des Gesamttisches der Schneidemaschine zum Handhaben des Schneidgutstapels auf einem durch aus dem Tisch austretende Luft gebildeten Luftpolster, Aktivieren der Luftzufuhr nur im Bereich eines verfahrbaren Tischteils des Gesamttisches zur dortigen Ausbildung eines Luftpolsters, Verstellen eines Anlagemaßes für den Stapel, Verstellen eines Einlegemaßes für den Stapel sind.

12. Verfahren nach einem der Ansprüche 1 bis 11, **dadurch gekennzeichnet, dass** sowohl das jeweilige auf dem Display dargestellte, angefahrene Schneidmaß oder das als nächstes anzufahrende Schneidmaß als auch die diesem Schneidmaß zugeordneten, auf dem Display dargestellten programmierten Zusatzfunktionen gegenüber den anderen Schneidmaßen und diesen zugeordneten programmierten Zusatzfunktionen hervorgehoben dargestellt werden.
